# FASCICULE DE BREVET EUROPEEN

(11) **EP 0 349 413 B1**
(45) Date de publication et mention de la délivrance du brevet: **15.09.1993**
(21) Numéro de dépôt: 89401822.5
(22) Date de dépôt: 27.06.1989
(51) Int. Cl.: G07F 7/08

(54) **Système de gestion de supports d'informations portatifs**
Verwaltungssystem für tragbare Datenträger
Accounting system for portable data carriers

(30) Priorité: 28.06.1988 FR 8808641
(43) Date de publication de la demande: 03.01.1990
(73) Titulaire: SCHLUMBERGER INDUSTRIES, F-92120 Montrouge (FR)
(72) Inventeur: Barakat, Simon, F-78570 Andresy (FR); Guion, Christian, F-91370 Verrières Le Buisson (FR)
(74) Mandataire: Hasenrader, Hubert

(56) Documents cités:
- EP-A- 0 127 424
- EP-A- 0 200 343
- DE-A- 2 929 603

## Description

La présente invention concerne un système de gestion de supports d'informations portatifs.

Plus précisément l'invention a pour objet un tel système dans lequel chaque support d'informations, par exemple des cartes à mémoire électronique ou magnétique, comporte une information d'identification, par exemple un numéro d'identification, propre à la carte. Lorsque ces cartes donnent accès à des prestations il est nécessaire de vérifier, avant d'autoriser la fourniture de la prestation, que le numéro de la carte n'est pas sur une liste d'opposition, appelée habituellement "liste noire". Cette liste établie par l'organisme qui gère les cartes comprend tous les numéros des cartes dont l'utilisation doit être interdite. Cela peut être dû au fait que la carte a été déclarée comme perdue ou volée à son légitime propriétaire. Cela peut également être dû au fait que la carte est bien détenue par le propriétaire mais que celui-ci a déjà obtenu indûment, à l'aide de sa carte, des prestations pour des montants dépassant le crédit du compte associé à cette carte.

Pour obtenir une prestation, le titulaire de la carte introduit celle-ci dans un lecteur qui effectue un certain nombre de contrôles des informations mémorisées dans la carte et autorise ou non l'obtention de la prestation en fonction des résultats de ces contrôles.

Un des contrôles consiste précisément à savoir si la carte est frappée ou non d'opposition, c'est à dire si elle appartient ou non à la "liste noire". Ce contrôle peut être effectué de deux manières principales : soit ce contrôle est local. Dans ce cas, le lecteur de cartes contient en mémoire la "liste noire". Comme les capacités de mémoire du lecteur ou de gestion de cette mémoire sont nécessairement limitées, la "liste noire" est nécessairement réduite et le contrôle est donc relativement peu efficace ; soit ce contrôle est centralisé. Dans ce cas les lecteurs de cartes sont reliés en permanence (on line) à un centre informatique qui gère la "liste noire". Un tel système est efficace puisque le centre de traitement a en mémoire la totalité des numéros de cartes frappés d'opposition. Mais il est onéreux puisqu'il faut une liaison permanente entre chaque lecteur et le centre et que chaque introduction de carte entraîne le transit d'informations entre le lecteur et le centre de traitement.

De plus, la comparaison d'un numéro à ceux de la liste noire est longue.

Le document EP-A-0 200 343 décrit un système de gestion de "liste noire" pour des cartes permettant des transactions. La "liste noire" est stockée dans un centre de gestion. Les terminaux locaux sont munis de programmes évaluant le risque de la transaction et ne faisant intervenir la liste noire complète que si le risque est jugé trop élevé. Ce système ne fournit qu'une solution partielle puisque les cartes ne sont pas vérifiées si le risque est considéré comme réduit.

Un objet de l'invention est de fournir un système de gestion des listes d'opposition qui soit plus rapide et moins onéreux que les systèmes connus tout en permettant d'obtenir une très bonne sécurité en prenant en compte des listes d'opposition comportant de très nombreux numéros de cartes.

Pour atteindre ce but, selon l'invention, le système de gestion de supports d'informations portatifs comprend une pluralité de supports portatifs d'informations, chaque support comportant en mémoire une information d'identification, une pluralité de dispositifs locaux de traitement pour lire dans la mémoire dudit support ladite information d'identification, un dispositif central de traitement et des moyens pour transmettre des informations dans un sens et dans l'autre entre ledit dispositif central et lesdits dispositifs locaux de traitement, ledit dispositif central de traitement comprenant des moyens de mémorisation d'une liste des informations d'identification frappées d'opposition, des moyens pour comparer une information d'identification reçue aux informations d'identification de ladite liste et des moyens pour émettre une information de comparaison.

Le système de gestion se caractérise en ce que chaque dispositif local de traitement comprend des moyens pour mémoriser des classes d'informations d'identification et pour chaque classe un premier état si aucune information de ladite classe n'est frappée d'opposition et un deuxième état si au moins une information de ladite classe est frappée d'opposition ; des moyens pour associer de façon unique et préétablie l'information d'identification lue sur un support d'informations à une desdites classes, des moyens pour transmettre audit dispositif central de traitement ladite information d'identification si celle-ci appartient à une classe ayant le deuxième état, et des moyens pour émettre une information d'alarme si ledit signal de comparaison indique que l'information d'identification est effectivement frappée d'opposition.

De préférence, le système comprend en outre des moyens pour charger dans la mémoire de chaque dispositif local de traitement l'état de chaque classe à partir de la liste d'informations d'identification frappées d'opposition contenue dans le dispositif central de traitement.

De préférence encore l'opposition peut correspondre à des niveaux d'opposition différents et lesdits moyens de chargement sont contrôlés pour affecter à une classe le deuxième état en fonction d'un niveau d'opposition prédéterminé.

On comprend qu'ainsi on réalise un contrôle à deux niveaux. Le premier est mis en oeuvre par le lecteur grâce à la consultation de la liste des classes dans le deuxième état c'est à dire des classes dans lesquelles au moins un numéro de carte est frappé d'opposition. Ce n'est que dans le cas où la carte présentée a un numéro appartenant à une classe "opposée" qu'on interroge le "central" où tous les numéros opposés sont mémorisés. On peut donc prendre en compte la totalité des numéros frappés d'opposition mais le central ne sera effectivement interrogé qu'une fois sur huit en moyenne si le nombre de classes opposées représente 1/8ème du nombre total de classes.

D'autres caractéristiques et avantages de l'invention apparaitront plus clairement à la lecture de la description qui suit d'un mode préféré de mise en oeuvre de l'invention donnée à titre d'exemple non limitatif. La description se réfère au dessin annexé sur lequel :
La figure 1 montre un système de gestion selon l'invention, un seul dispositif local étant représenté ; et

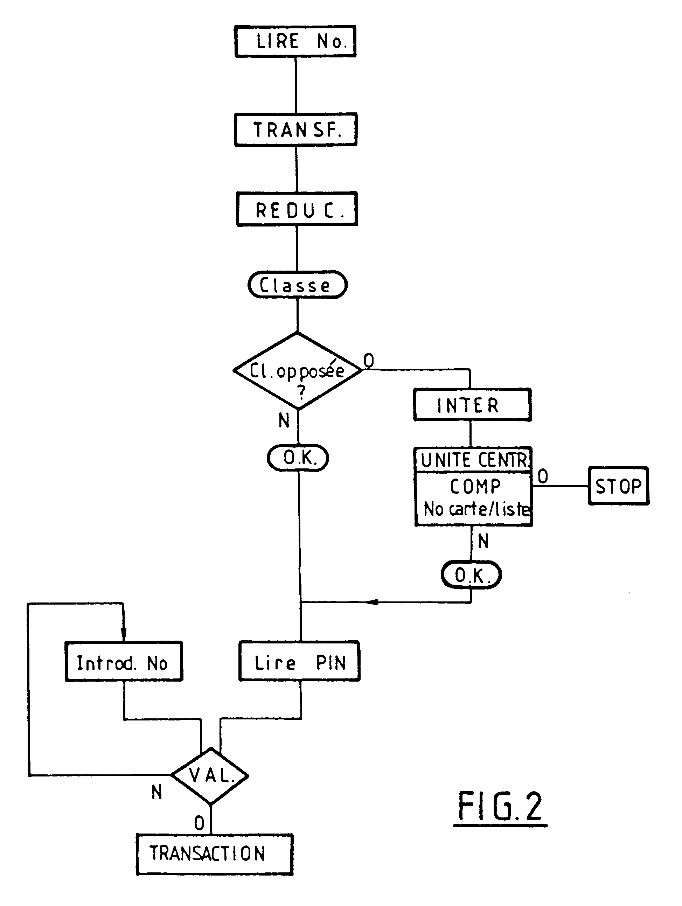

La figure 2 est un organigramme du fonctionnement du système de la figure 1.

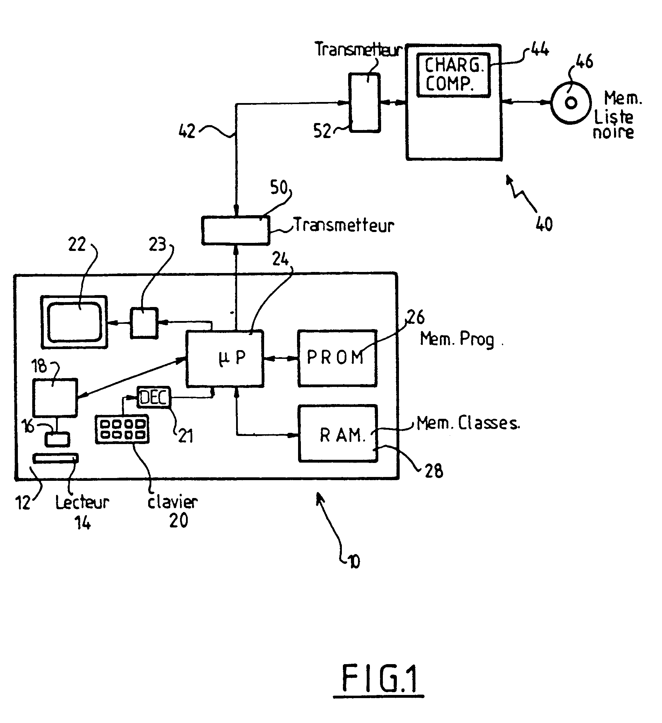

Sur la figure 1 on a représenté un dispositif local de traitement 10 de supports d'informations. Le support d'informations est une carte à mémoire électronique et le dispositif local de traitement sera ultérieurement appelé terminal de traitement.

Le terminal 10 comprend un dispositif de lecture écriture pour cartes à mémoire 12 dont on a représenté la fente 14 d'introduction des cartes et le système de connexion 16 entre le circuit de la carte à mémoire et un circuit de traitement 18 du lecteur 12. Le terminal 10 comporte également un clavier 20 pour introduire des informations alphanumériques et un dispositif d'affichage 22, par exemple à cristaux liquides. Le centre du terminal 10 est constitué par un microprocesseur 24 qui gère les organes déjà énoncés et qui peut mettre en oeuvre des programmes stockés dans une mémoire de programme 26 par exemple du type non volatile (EPROM, EEPROM). Le microprocesseur 24 est également associé à une mémoire de données 28 par exemple du type RAM. Le contenu de la mémoire 28 sera explicité ultérieurement.

Le microprocesseur 24 est relié à l'afficheur 22 par un circuit de commande 23. De même le clavier 20 est relié au microprocesseur 24 par un décodeur 21.

Le terminal 10 peut être mis en communication avec un centre de traitement informatique 40 par une ligne 42 du type téléphonique. Le centre de traitement 40 comprend essentiellement des moyens informatiques 44 et une mémoire 46 contenant la liste de la totalité des numéros de cartes frappées d'opposition (liste noire). On a également repéré par 48 une partie de la mémoire de programme des moyens informatiques 44 contenant les programmes propres au système faisant l'objet de la présente invention. Le terminal 10 et le central 40 peuvent être reliés entre eux par la ligne 42 grâce aux MODEM 50 et 52.

Si l'on revient maintenant au terminal 10, on va décrire plus en détails le contenu de ses mémoires 26 et 28.

Chaque carte comporte en mémoire un numéro d'identification qui comporte par exemple 19 chiffres, ou caractères. Il y a donc 10¹⁹ numéros possibles. Chaque carte a un numéro unique. Dans l'exemple présentement décrit, la carte comporte également en mémoire un numéro d'identification personnel (PIN code en anglais) qui lui est propre au porteur de la carte. On répartit les numéros de cartes en N classes de telle manière que chaque numéro de carte appartiennent de façon unique à une des N classes. On donnera ultérieurement un exemple de transformation qui permet d'associer à chaque numéro de carte une des N classes (256.000 par exemple). Si l'on considère la liste des numéros de cartes frappées d'opposition, on peut établir dans l'ensemble des N classes une partition à deux sous ensembles. Le premier sous-ensemble comprend toutes les classes dans lesquelles aucun numéro de carte n'est frappé d'opposition, alors que le deuxième sous ensemble comprend toutes les classes dans lesquelles au moins un numéro est frappé d'opposition. Dans la suite de la description les classes du deuxième sous-ensemble seront dites "opposées".

Dans la mémoire 28 on charge l'état des différentes classes de numéros, c'est à dire le fait qu'elles soient "opposées" ou "non opposées". Si la mémoire 28 comporte 256 k bits de mémoire il est possible de mémoriser l'état de 256.000 classes. Si le point mémoire correspondant à une classe est à la valeur "1" la classe est "opposée", s'il est à "0" la classe est "non-opposée". Le rang de chaque classe est représenté par l'adresse du point de mémoire correspondant.

La mémoire 26 contient un certain nombre de programmes pour la mise en oeuvre du système. Elle contient les programmes TRANS et REDUC qui permettent, comme on l'expliquera ultérieurement, d'associer à un numéro de carte le numéro de la classe à laquelle il appartient. Le programme COMP permet d'aller lire dans la mémoire 28 à l'adresse correspondante l'état d'une classe (opposée ou non). Le programme INTERR permet d'établir la liaison entre le terminal 10 et le central 40, de commander le transfert d'un numéro de carte vers le central et de recueillir la réponse du central 40 quant à l'état du numéro de la carte (opposée ou non). Enfin le programme VAL permet de vérifier si le numéro d'identification personnel introduit par l'usager à l'aide du clavier 20 est bien conforme à celui qui est mémorisé dans la carte.

Le système central de traitement 42 contient essentiellement dans sa mémoire 44, un programme CHARGE qui permet, à partir de la liste des numéros frappés d'opposition stockée dans la mémoire 46, d'élaborer l'état de chaque classe de numéro et de transmettre ces états au terminal 10 en vue de leur mémorisation dans la mémoire 28. Le programme COMPAR permet de comparer un numéro de carte aux numéros de carte stockés dans la mémoire 36.

On va maintenant décrire plus en détails le fonctionnement du sytème. On suppose que la mémoire 28 du terminal 10 contient effectivement l'état des N classes de numéros. L'usager introduit sa carte dans la fente 14 du terminal 10. Lorsque celle-ci est arrivée en position de traitement, c'est à dire en contact avec le connecteur 16, le circuit de traitement 18 lit le numéro de la carte introduite et le transmet au microprocesseur 24. Celui-ci commande le déroulement des programmes TRANS et REDUC. On obtient ainsi le rang de la classe à laquelle appartient le numéro lu. Puis le microprocesseur 24 commande le déroulement du programme COMP. Ce programme commande la lecture du point de la mémoire 28 dont l'adresse correspond au rang de la classe déterminée par les programmes TRANS et REDUC. Si le point mémoire est à l'état "O" la classe ne comporte pas de numéro opposé. Le numéro de la carte introduite dans le terminal 10 n'est donc pas, lui-même, frappé d'opposition. On décrira ultérieurement, dans ce cas, la suite du processus. Si, au contraire, le point mémorisé est à l'état "1", cela signifie que le numéro de la carte appartient à une classe contenant au moins un numéro "opposé". Le micropresseur 24 déclenche alors le déroulement du programme INTERR. Le numéro de la carte est transmis au central 40 via les MODEM 50 et 52 et la ligne 42. A la réception de ce numéro le système de traitement 44 initialise le programme COMPAR pour vérifier si le numéro reçu figure dans la liste des numéros frappés d'opposition stockée dans la mémoire 46. Le résultat de la comparaison est transmis au terminal 10 via la ligne 42. Si le numéro est effectivement frappé d'opposition, cette information apparait sur le dispositif d'affichage 22 afin d'en informer le commerçant chez qui le terminal 10 est installé. Dans le cas contraire la carte n'est pas frappée d'opposition et le processus se poursuit.

Après qu'on se soit assuré que la carte n'est pas frappée d'opposition, le terminal 10 invite le détenteur de la carte à introduire à l'aide du clavier son numéro personnel qui a été lu dans la mémoire de la carte. S'il y a compatibilité, entre le numéro lu et le numéro entré la carte est accepté et l'usager pourra obtenir la prestation souhaitée. S,il n'y a pas compatibilité l'usager est invité à introduire à nouveau son nouveau numéro personnel. Au bout d'un nombre prédéterminé d'introductions consécutives de numéros erronés, la carte est confisquée. Cette phase se déroule sous le contrôle du programme VAL.

Il découle de la description précédente que le système de gestion selon l'invention présente de nombreux avantages par rapport aux deux types de solutions proposées antérieurement.

En modifiant périodiquement les classes frappées d'opposition on peut donner au contrôle par le centre informatique un caractère pseudo-aléatoire ce qui est encore plus dissuasif.

Il est possible d'adapter la probabilité du contrôle par le centre aux risques que présente chaque point de vente en déclarant en "opposition" un nombre plus ou moins élevé de classes de numéros.

Grâce au premier "tri" effectué au niveau du terminal il est possible de prendre en considération des listes d'opposition très longues.

Enfin la consultation des classes de numéros frappées d'opposition est quasi-immédiate, et de toutes manières beaucoup plus rapide que la comparaison directe d'un numéro aux numéros de la liste d'opposition.

Dans la description précédente on a envisagé le cas où la carte comporte un numéro personnel d'identification. Il va de soi que le système peut s'appliquer au cas où la carte ne comporte pas ce numéro. On comprend que dans ce cas la comparaison du numéro de la carte à une liste d'opposition complète est encore plus importante.

Comme on l'a décrit précédemment le programme CHARGE stocké dans la mémoire du central permet de charger dans la mémoire 28 de chaque terminal le statut (opposée ou non opposée) des classes de numéros à partir de la liste complète des numéros de cartes opposées contenue dans la mémoire 46. Le programme CHARGE met en oeuvre les programmes TRANS et REDUC pour chaque numéro de la liste d'opposition. Il détermine ainsi le rang des classes de numéros "opposées". Puis il transmet, via la ligne 42, le statut de chaque classe par un processus qu'on va décrire maintenant. Deux cas se présentent : soit il s'agit du chargement initial ; soit il s'agit d'une mise à jour. On va d'abord considérer le cas du chargement initial. Le problème est bien sûr de réduire le temps de transmission des classes opposées. Dans le cas où ces informations sont transmises en code ASCII sur une ligne avec une vitesse de transmission, par exemple, de 1200 bauds. Selon l'invention on transmet la différence entre les rangs de deux classes opposées successives, au lieu de transmettre pour chaque classe son statut (1 ou 0). La différence de rangs est exprimée à l'aide d'un octet. Si, comme on l'a indiqué, la ligne permet de transmettre 100 octets par seconde et si le nombre de classes opposées est de 32.000, le temps de transmission est de 5,3 minutes, ce qui est très sensiblement inférieur au temps qui serait nécessaire pour transmettre la totalité des statuts des classes.

Lorsqu'il s'agit de mettre à jour une liste déjà chargée dans la mémoire 28 il faut pouvoir soit ajouter une classe (changer le 0 en un 1) soit retirer une classe (changer un 1 en un 0). On utilise le même principe que celui qui a été décrit précédemment. Cependant, comme le pas entre deux classes à changer (différence entre les rangs des classes) est a priori plus grand que lors du chargement initial, l'instruction de changement est donnée sur deux octets.

Pour qu'un numéro de carte soit mis sur la liste noire, il peut se présenter différentes raisons dont la gravité est plus ou moins grande : soit la carte a été déclarée comme volée ; soit le détenteur de la carte a déjà utilisé fréquemment sa carte en dépassant le solde de son compte ; soit encore le détenteur de la carte a déjà utilisé sa carte exceptionnellement en dépassant le solde de son compte, tout en présentant une bonne solvabilité. Lors de l'établissement de la liste d'opposition dans la mémoire 46 du "central" il est possible d'adjoindre à chaque numéro opposé un code représentant le niveau 1, 2, 3 etc.. d'opposition à l'utilisation de la carte. Lors du chargement pour la mise à jour de la liste des classes opposées dans la mémoire 28 du terminal il est possible de ne prendre en compte que certains niveaux d'opposition pour définir les classes opposées en fonction des caractéristiques du lieu où est installé le terminal. Ceci permet, dans les lieux sûrs, de diminuer la probabilité et donc la fréquence d'un appel vers le central pour consulter la liste noire complète et au contraire de l'augmenter pour des terminaux installés dans des lieux réputés peu sûrs.

En ce qui concerne les programmes TRANS et REDUC ils ont globalement pour but d'associer de façon unique à chaque numéro d'identification d'une carte un numéro de classes. Le programme TRANS associe, par une relation bijective f, à tout numéro de carte x un autre numéro de carte y. Par exemple f définit une permutation des chiffres constituant le numéro de la carte. Le programme REDUC permet d'associer un numéro de carte à une et une seule des N classes de numéros de cartes. Si on appelle g la relation correspondante, on a :
Vy numéro de carte ; (g (y) = z, numéro de classe. Si on appelle M le nombre de numéros de carte on a bien sur M>N. La relation g consiste par exemple à effectuer la division modulo N du numéro de la carte, le reste de la division indiquant le numéro de la classe.

En résumé, si x est le numéro d'une carte, la classe z à laquelle il appartient est définie par : z = g o f (x).

## Revendications

1. Système de gestion de supports d'informations portatifs comprenant une pluralité de supports portatifs d'informations, chaque support comportant en mémoire une information d'identification, une pluralité de dispositifs locaux (10) de traitement pour lire dans la mémoire dudit support ladite information d'identification, un dispositif central de traitement (40) et des moyens (42, 50, 52) pour transmettre des informations dans un sens et dans l'autre entre ledit dispositif central et lesdits dispositifs locaux de traitement, ledit dispositif central (40) de traitement comprenant des moyens de mémorisation (46) d'une liste des informations (44) d'identification frappées d'opposition, des moyens pour comparer une information d'identification reçue aux informations d'identification de ladite liste et des moyens pour émettre une information de comparaison, caractérisé en ce que chaque dispositif local de traitement (10) comprend des moyens (28) pour mémoriser des classes d'informations d'identification et pour chaque classe un premier état si aucune information de ladite classe n'est frappée d'opposition et un deuxième état si au moins une information de ladite classe est frappée d'opposition ; des moyens (24) pour associer de façon unique et préétablie l'information d'identification lue sur un support d'informations à une desdites classes, des moyens (42, 50, 52) pour transmettre audit dispositif central de traitement ladite information d'identification si celle-ci appartient à une classe ayant le deuxième état, et des moyens pour émettre une information d'alarme si ledit signal de comparaison indique que l'information d'identification est effectivement frappée d'opposition.

2. Système selon la revendication 1, caractérisé en ce qu'il comprend en outre des moyens (44, 42) pour charger dans la mémoire de chaque dispositif local de traitement (10) l'état de chaque classe à partir de la liste d'informations d'identification frappées d'opposition contenue dans le dispositif central de traitement (40).

3. Système selon la revendication 2, caractérisé en ce que l'opposition peut correspondre à des niveaux d'opposition différents et en ce que lesdits moyens de chargement sont contrôlés pour affecter à une classe le deuxième état en fonction d'un niveau d'opposition prédéterminé.

4. Système selon l'une quelconque des revendications 2 et 3, caractérisé en ce que le statut de chaque classe d'informations d'identification est mémorisée dans une position mémoire repérée par son adresse en donnant à la position mémoire une valeur binaire correspondant au statut de ladite classe, et en ce que, pour charger dans la mémoire dudit dispositif local de traitement le statut desdites classes à partir du dispositif central (40) de traitement, on transmet successivement la différence entre les adresses de deux classes de numéros consécutives ayant le deuxième état.

## Claims

1. System for controlling the use of portable data media comprising a plurality of removable portable data media, each including an identification number; a plurality of local processing devices (10) for reading identification numbers from said media, a computer center (40), and means (42, 50, 52) for transmitting data in both directions between said computer center and said local processing devices, said computer center (40) including means (46) for storing a "black" list (44) of stopped identification numbers, means for comparing a received identification number with the identification numbers in said "black" list, and means for transmitting information concerning the results of the comparison, characterized in that each local processing device (10) includes means (28) for storing classes of identification numbers, and for storing a first status for each class when none of the identification numbers in that class appears on the "black" list, and a second status when at least one of the identification numbers in that class appears on the "black" list, means (24) for associating uniquely and in a preestablished manner each identification number read from said portable data media with one of said classes, means (42, 50, 52) for transmitting said identification number to said computer center if the number belongs to a class in said second state, and means for generating an alarm if said information concerning the result of the comparison by the computer center indicates that the identification number contained in the data medium being read does indeed appear in the "black" list.

2. System according to claim 1, characterized in that it further includes means (44, 42) for loading the memory in each local processing device (10) with the status of each class on the basis of the "black" list of identification number contained in the computer center (40).

3. System according to claim 2, characterized in that the "black" list contains identification numbers associated with different levels of seriousness, and in that said means for loading the local processing devices are controlled to attribute the second status to any given class as a function of a predetermined level of seriousness.

4. System according to any one of claims 2 and 3, characterized in that the status of each class of identification numbers is stored in a memory location specified by an address by giving a binary value to that memory location corresponding to the status of said class, and in which, in order to load the statuses of said classes in the memory of each of said local processing devices from the central computer (40), successive differences are transmitted between the addresses of consecutive pairs of classes of identification number having the same status.

## Patentansprüche

1. Verwaltungssystem für tragbare Datenträger mit einer Mehrzahl tragbarer Datenträger, von denen jeder einen gespeicherten Identifikationsdatensatz trägt, einer Mehrzahl lokaler Bearbeitungsvorrichtungen (10) zum Lesen des Identifikationsdatensatzes im Speicher des Datenträgers, einer zentralen Bearbeitungsvorrichtung (40) und Einrichtungen (42, 50, 52) zur Übertragung von Daten in beiden Richtungen zwischen der zentralen und den lokalen Bearbeitungseinrichtungen, wobei die zentrale Bearbeitungseinrichtung (40) Speichereinrichtungen (46) zum Speichern einer Liste (44) von gesperrten Identifikationsdatensätzen, Einrichtungen zum Vergleichen eines empfangenen Identifikationsdatensatzes mit Identifikationsdatensätzen der Liste und Einrichtungen zur Ausgabe einer Vergleichsinformation umfaßt,
**dadurch gekennzeichnet,**
daß jede lokale Bearbeitungsvorrichtung (10) umfaßt: Einrichtungen (28) zum Speichern der Identifikationsdatensatzklassen und, für jede Klasse, eines ersten Zustands, wenn kein Datensatz der Klasse gesperrt ist und eines zweiten Zustands, wenn mindestens ein Datensatz der Klasse gesperrt ist, Einrichtungen (24) zum Zuordnen des auf einem Datenträger gelesenen Identifikationsdatensatzes in eindeutiger und vorbestimmter Weise zu einer der Klassen, Einrichtungen (42, 50, 52) zum Übertragen an die zentrale Bearbeitungsvorrichtung des Identifikationsdatensatzes, wenn dieser zu einer Klasse mit dem zweiten Zustand gehört, und Einrichtungen zum Ausgeben einer Warninformation, wenn das Vergleichssignal anzeigt, daß der Identifikationsdatensatz tatsächlich gesperrt ist.

2. System nach Anspruch 1,
gekennzeichnet durch
Einrichtungen (44, 42) zum Laden des Zustands einer jeden Klasse in den Speicher jeder lokalen Bearbeitungsvorrichtung (10) auf der Grundlage der in der zentralen Bearbeitungseinrichtung (40) enthaltenen Liste von gesperrten Informationsdatensätzen.

3. System nach Anspruch 2,
dadurch gekennzeichnet,
daß die Sperrung unterschiedlichen Sperrniveaus entsprechen kann und daß die Ladeeinrichtungen gesteuert werden, so daß einer Klasse in Abhängigkeit von einem vorherbestimmten Sperrniveau der zweite Zustand zugewiesen wird.

4. System nach einem der Ansprüche 2 oder 3,
dadurch gekennzeichnet,
daß der Zustand jeder Identifikationsdatensatzklasse in einer durch ihre Adresse bezeichneten Speicherposition abgespeichert wird, indem der Speicherposition in Abhängigkeit vom Zustand der Klasse ein binärer Wert zugeordnet wird und daß zum Laden des Zustands der Klassen von der zentralen Bearbeitungseinrichtung (40) in den Speicher der lokalen Bearbeitungsvorrichtung aufeinanderfolgend die Differenzen zwischen den Adressen zweier aufeinanderfolgender Klassen, die sich im zweiten Zustand befinden, übertragen werden.
